(19)

Europäisches Patentamt
European Patent Office
Office européen des brevets

(11)  **EP 3 166 021 A1**

(12)  **EUROPEAN PATENT APPLICATION**

(43) Date of publication:
**10.05.2017 Bulletin 2017/19**

(51) Int Cl.:
**G06F 17/30** [(2006.01)]

(21) Application number: **15306770.7**

(22) Date of filing: **06.11.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• **BILEN, Cagdas**
  **35576 Cesson-Sévigné (FR)**
• **ZEPEDA SALVATIERRA, Joaquin**
  **35576 Cesson-Sévigné (FR)**
• **PEREZ, Patrick**
  **35576 Cesson-Sévigné (FR)**

(74) Representative: **Huchet, Anne
TECHNICOLOR
1-5, rue Jeanne d'Arc
92130 Issy-les-Moulineaux (FR)**

(54)  **METHOD AND APPARATUS FOR IMAGE SEARCH USING SPARSIFYING ANALYSIS AND SYNTHESIS OPERATORS**

(57)  In a particular implementation, images are represented by feature vectors, whose sparse representations are computed using an analysis operator. The sparse representations of the images and a synthesis operator are used to efficiently compute similarity metrics between the images. When the sparse representation of the query image is readily available, a symmetric similarity metric is calculated using the sparse representation of the query image and database images. Otherwise, when the sparse representation of the query image is not available, an asymmetric similarity metric can be calculated using the feature vector of the query image and sparse representations of the database images. Given pair-wise constraints or triplet constraints on similarity, the synthesis operator can be computed using an optimization problem based on a penalty function. Also, the synthesis operator can be learned jointly with the analysis operator.

<u>100</u>

| Input query image | ~ 110 |
| Image feature vector calculation | ~ 120 |
| Compact representation | ~ 130 |
| Distance/similarity calculation | ~ 140 |
| Image ranking | ~ 150 |
| Output matching image(s) | ~ 160 |

*FIG. 1*

**EP 3 166 021 A1**

**Description**

TECHNICAL FIELD

This invention relates to a method and an apparatus for image search, and more particularly, to a method and an apparatus for image search using sparsifying analysis and synthesis operators.

BACKGROUND

With the increasing size of image collections and the related difficulty in manually annotating them, automated image search and comparison methods have become crucial when searching for relevant images in a large collection. Many systems that currently exist enable such search approaches, including commercial web search engines that admit an image as the query and return a ranked list of relevant web images; copyright infringement detection methods that are robust to image manipulations such as cropping, rotation, mirroring and picture-in-picture artifacts; semantic search systems that enable querying of an unannotated private image collection based on visual concepts (*e.g.*, cat); object detection systems that are robust to the image background content; automatic face verification methods; and vision-based navigation systems used, for example, as part of the control mechanism of self-driving cars.

A general image search algorithm can be seen as having various goals including: i) finding correctly matching images given a task-specific search criteria and ii) doing so in a time and resource efficient manner, particularly in the context of large image databases. In addressing the first goal, discriminative Mahalanobis metric learning methods have become an important part of the research toolbox. Such methods can be seen as applying an explicit linear transform to the image feature vector with the goal of making distance computations between transformed feature vectors better correspond to the search criteria. The linear transform can be learned using one of a variety of objectives in order to adapt it to various possible search criteria including image classification, face verification, or image ranking. Common to all these methods is the fact that the learned linear transform is a complete or undercomplete matrix that is constant for all image feature vectors.

Concerning the second goal of image search systems, that of time and resource efficiency of the search process, one recent successful method represents all the database images using a product quantizer that enables both a very compact representation and a very efficient comparison to query features. Methods based on sparse coding have also been attempted, as sparse coding can be seen as a generalization of vector quantization. The general aim of these methods is to produce a very compact representation of the input feature vector consisting, for example, of codeword indices and possibly accompanying weights.

SUMMARY

According to a general aspect, a method for performing image search is presented, comprising: accessing at least one of a first feature vector corresponding to a query image and a first sparse representation of the query image, the first sparse representation being based on an analysis operator and the first feature vector; determining a similarity metric between the query image and a second image of an image database using a synthesis operator, responsive to a second sparse representation and one of the first feature vector and the first sparse representation, the second sparse representation being based on the second feature vector corresponding to the second image and the analysis operator; and generating an image search output based on the similarity metric between the query image and the second image.

The image search output may indicate one of (1) a rank of the second image and (2) whether the second image matches the query image.

The method for performing image search may receive at least one of the first feature vector and the first sparse representation from a user device via a communication network, and may transmit the image search output to the user device via the communication network.

The method for performing image search may determine the synthesis operator based on a set of pair-wise constraints, wherein each pair-wise constraint indicates whether a corresponding pair of training images are similar or dissimilar.

The method for performing image search may determine the synthesis operator based on a set of triplet constraints, wherein each triplet constraint indicates that a first training image of the triplet is more similar to a second training image of the triplet than to a third training image of the triplet.

The synthesis operator may be trained such that a similarity metric determined for training images corresponding to a pair-wise constraint or a triplet constraint is consistent with what the pair-wise constraint or the triplet constraint indicates.

The similarity metric may be determined as $S_{sm}(\mathbf{z}_q, \mathbf{z}_2) = \mathbf{z}_q^T \mathbf{B}^T \mathbf{B} \mathbf{z}_2$, wherein $S_{sm}()$ is the similarity metric, $\mathbf{z}_q$ is the first sparse representation of the query image, $\mathbf{z}_2$ is the second sparse representation of the second image in the image database, and **B** is the synthesis operator.

The similarity metric may also be determined as $S_{asm}(\mathbf{y}_q, \mathbf{z}_2) = \mathbf{y}_q^T \mathbf{B} \mathbf{z}_2$, wherein $S_{asm}()$ is the similarity metric, $\mathbf{y}_q$ is the first feature vector of the query image, $\mathbf{z}_2$ is the second sparse representation of the second image in the image database, and **B** is the synthesis operator.

According to another general aspect, an apparatus for performing image search is presented, comprising: an input configured to access at least one of a first feature vector corresponding to a query image and a first sparse representation of the query image, the first sparse representation being based on an analysis operator and the first feature vector; and one or more processors configured to: determine a similarity metric between the query image and a second image of an image database using a synthesis operator, responsive to a second sparse representation and one of the first feature vector and the first sparse representation, the second sparse representation being based on the second feature vector corresponding to the second image and the analysis operator, and generate an image search output based on the similarity metric between the query image and the second image.

The apparatus for performing image search may further comprise a communication interface configured to receive the at least one of the first feature vector and the first sparse representation from a user device via a communication network, and to transmit the image search output to the user device via the communication network.

The apparatus for performing image search may determine the synthesis operator based on a set of pair-wise constraints, wherein each pair-wise constraint indicates whether a corresponding pair of training images are similar or dissimilar.

The apparatus for performing image search may determine the synthesis operator based on a set of triplet constraints, wherein each triplet constraint indicates that a first training image of the triplet is more similar to a second training image of the triplet than to a third training image of the triplet.

The synthesis operator may be trained such that a similarity metric determined for training images corresponding to a pair-wise constraint or a triplet constraint is consistent with what the pair-wise constraint or the triplet constraint indicates.

The similarity metric may be determined as $S_{sm}(\mathbf{z}_q, \mathbf{z}_2) = \mathbf{z}_q^T \mathbf{B}^T \mathbf{B} \mathbf{z}_2$, wherein $S_{sm}()$ is the similarity metric, $\mathbf{z}_q$ is the first sparse representation of the query image, $\mathbf{z}_2$ is the second sparse representation of the second image in the image database, and **B** is the synthesis operator.

The similarity metric may also be determined as $S_{asm}(\mathbf{y}_q, \mathbf{z}_2) = \mathbf{y}_q^T \mathbf{B} \mathbf{z}_2$, wherein $S_{asm}()$ is the similarity metric, $\mathbf{y}_q$ is the first feature vector of the query image, $\mathbf{z}_2$ is the second sparse representation of the second image in the image database, and **B** is the synthesis operator.

The present embodiments also provide a non-transitory computer readable storage medium having stored thereon instructions for performing any of the methods described above.

BRIEF DESCRIPTION OF THE DRAWINGS

FIG. 1 illustrates an exemplary method for performing image search, according to an embodiment of the present principles.

FIG. 2 illustrates an exemplary method for determining the operator for the similarity function.

FIG. 3 shows exemplary pictures from an image training database, where similar images are grouped together, and images from different groups are dissimilar.

FIG. 4 illustrates an exemplary analysis encoding process for generating a sparse code **z** for vector **y**, according to an embodiment of the present principles.

FIG. 5A shows exemplary sparse codes for images in a database, where FIG. 5B is an expanded view of the upper-right portion of FIG. 5A.

FIG. 6A shows a parametrized hinge loss function, and FIG. 6B shows a continuous hinge loss function.

FIG. 7A illustrates an exemplary learning process for learning operator **B** using pair-wise constraints for a symmetric similarity metric, according to an embodiment of the present principles, and FIG. 7B illustrates an exemplary learning process for learning operator **B** using pair-wise constraints for an asymmetric similarity metric, according to an embodiment of the present principles.

FIG. 8A illustrates an exemplary process for performing image matching, according to an embodiment of the present principles, and FIG. 8B illustrates an exemplary process for performing image ranking for a query image, according to an embodiment of the present principles.

FIG. 9 illustrates a block diagram of an exemplary system in which multiple user devices are connected to an image search engine according to the present principles.

FIG. 10 illustrates a block diagram of an exemplary system in which various aspects of the exemplary embodiments of the present principles may be implemented.

DETAILED DESCRIPTION

The present principles are directed to image search and provide various features compared to the existing methods. First, the proposed approaches may rely on a correlation metric to compare different items instead of a distance metric as in the majority of earlier works. This enables a more flexible framework than those based on the distance metric while offering computational efficiency. Secondly, the proposed methods may use sparse representations in the proposed correlation metrics. This enables efficient storage of the data items in a database and improves the computation speed when used together with the proposed correlation metrics. Thirdly, the proposed methods can also be adapted for use with query items for which the sparse representation is not initially available so that correlation comparison can still be performed quickly while still providing the advantages mentioned above.

In the present application, we denote scalars, vectors and matrices using, respectively standard, bold, and uppercase-bold typeface (e.g., scalar $\alpha$, vector $\mathbf{a}$ and matrix $\mathbf{A}$). We use $\mathbf{v}_k$ to denote a vector from a sequence $\mathbf{v}_1$, $\mathbf{v}_2$, ..., $\mathbf{v}_N$, and $v_k$ to denote the $k$-th coefficient of vector $\mathbf{v}$. We let $[\mathbf{a}_k]_k$ (respectively, $[\alpha_k]_k$) denotes concatenation of the vectors $\mathbf{a}_k$ (scalars $\alpha_k$) to form a single column vector. The transpose of a vector $\mathbf{v}$ is denoted by $\mathbf{v}^\mathbf{T}$ (similarly for a matrix).

Finally, we use $\frac{\partial \mathbf{y}}{\partial \mathbf{x}}$ to denote the Jacobian matrix with $(i, j)$-th entry $\frac{\partial y_i}{\partial x_j}$.

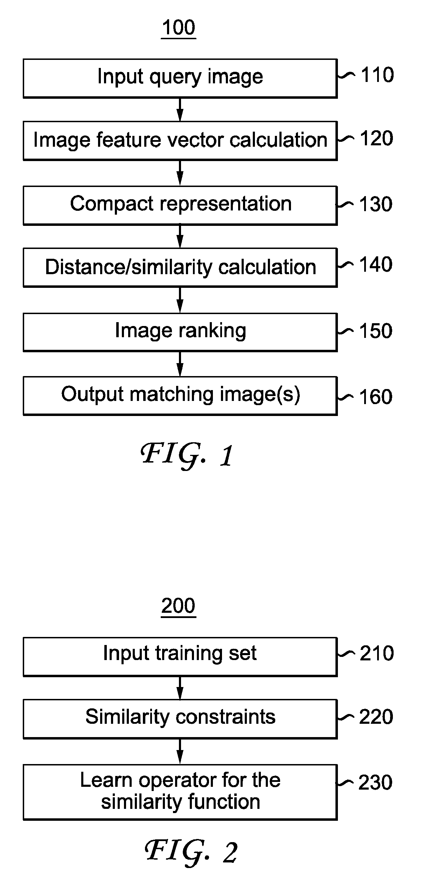

FIG. 1 illustrates an exemplary method 100 for performing image search, according to an embodiment of the present principles. At step 110, a query image is input and image search will be performed in an image database to return one or more matching images for the query image. At step 120, a feature vector is calculated for the query image.

A feature vector of an image contains information describing an image's important characteristics. Image search algorithms usually rely on an image encoding function to compute the feature vector $\mathbf{y} \in \mathbb{R}^N$ from a given image.

Common image feature construction approaches consist of first densely extracting local descriptors $\mathbf{x}_i \in \mathbb{R}^d$ such as SIFT (Scale-invariant feature transform) from multiple resolutions of the input image and then aggregating these descriptors into a single vector $\mathbf{y}$. Common aggregation techniques include methods based on $K$-means models of the local descriptor distribution, such as bag-of-words and VLAD (Vector of Locally Aggregated Descriptors) encoding, and Fisher encoding, which is based on a GMM (Gaussian Mixture Model) model of the local descriptor distribution.

At step 130, a compact representation is calculated for the feature vector. In many applications, a compact representation of a given data is a point of interest since these representations provide a better understanding of the underlying structures in the data. Compact representation can be any representation that represents original vectors by smaller data. Compact representation can be obtained by linear projection on a subspace resulting in smaller vectors than the original data size, or can be sparse representation, for example, obtained using a synthesis model and an analysis model as described below.

Synthesis Model and Dictionary Learning

Representing a data vector $\mathbf{y} \in \mathbb{R}^N$ as a weighted sum of $M$ known atoms $\mathbf{d}_i \in \mathbb{R}^N$ as in

$$\mathbf{y} = \sum_{i=1}^{M} x_i \mathbf{d}_i = \begin{bmatrix} \mathbf{d}_1 & \dots & \mathbf{d}_M \end{bmatrix} \begin{bmatrix} x_1 \\ \vdots \\ x_M \end{bmatrix} = \mathbf{D}\mathbf{x}$$

$$(1)$$

is called the synthesis model, and vector $\mathbf{x}$ is called the representation of vector $\mathbf{y}$ in dictionary $\mathbf{D}$. This representation is often more useful when the representation $\mathbf{x}$ has only few non-zero entries, *i.e.*, when $\mathbf{x}$ is sparse. For a given dictionary **D,** one can obtain a sparse representation of data vector **y** by using an encoder function so that **x** = E(**y**, **D**). The encoder function E() enforces sparsity on **x** while keeping the distance to the original data vector, d(**y**, **Dx**), sufficiently small. A common example of such an encoder function is the lasso regression defined as

$$E(\mathbf{y},\mathbf{D}) = \underset{\mathbf{x}}{\mathrm{argmin}}\, \|\mathbf{y}-\mathbf{Dx}\|_2^2 + \lambda\|\mathbf{x}\|_1$$

(2)

in which the $l_1$-norm and $l_2$-norm of a vector of size $N$ are defined respectively as

$$\|\mathbf{v}\|_1 \triangleq \sum_{k=1}^{N} |v_k| \quad , \quad \|\mathbf{v}\|_2 \triangleq \sqrt{\sum_{k=1}^{N} |v_k|^2}$$

(3)

The regression parameter $\lambda$ in Eq. (2) defines the tradeoff between the sparsity and the distance.

When many data points in a training set are available, $\mathbf{y}_i \in \mathcal{T}$, one can try to find a common dictionary that can sparsely represent all the points in the set. This procedure is called dictionary learning, commonly used in machine learning and signal processing. In general the dictionary learning methods can be posed as an optimization problem:

$$\bar{\mathbf{x}}_1,\ldots,\bar{\mathbf{x}}_T,\bar{\mathbf{D}} = \underset{\mathbf{x}_1,\ldots,\mathbf{x}_T,\mathbf{D}}{\mathrm{argmin}}\, \delta(\mathbf{y}_1,\mathbf{Dx}_1,\ldots,\mathbf{y}_T,\mathbf{Dx}_T) + \phi(\mathbf{x}_1,\ldots,\mathbf{x}_T) + \psi(\mathbf{D})$$

(4)

in which function $\delta()$ enforces a small distance between each data vector $\mathbf{y}_i$ and its sparse representation $\mathbf{Dx}_i$, the regularization function $\phi()$ enforces sparse representations and the regularization function $\psi()$ enforces certain structures within the dictionary **D** such as unit norm columns.

Analysis Model and Analysis Operator Learning

As an alternative to representing a data vector as a sum of few essential components as in the synthesis model, one can inspect specific properties of the data vector which is called the analysis model. A linear analysis operator, **A,** can be applied to data point **y** as in **z** = **Ay**(5)

so that the output vector **z** contains essential information on **y.** The analysis operators can be very useful if the output, **z**, is known to be sparse. However unlike synthesis representations, given the vector **z** the original vector **y** is often not unique. Hence one can distinguish two types of utilizing analysis operators and sparsity. The first one is finding a vector close to $\mathbf{y}_s$ that would have a sparse output vector (or sparse code) with **A,** where $\mathbf{y}_s$ represents a vector for which $\mathbf{Ay}_s$ is sparse and $\mathbf{y}_s$ and **y** are as close as possible. A common optimization method for this purpose is

$$\bar{\mathbf{y}} = \underset{\mathbf{y}}{\mathrm{argmin}}\, \|\mathbf{y}-\mathbf{y}_s\|_2^2 + \lambda\|\mathbf{Ay}\|_1$$

(6)

which is similar to lasso regression used in sparse coding. Similar to dictionary learning, analysis operators can also be learned for large datasets to be used in tasks such as denoising or deconvolution.

The second possible approach is simply finding a sparse code **z** close to $\mathbf{Ay}_s$. This is more useful for applications in which **z** is more of interest than **y**. Since **Ay** is already known, this operation is often much simpler than solving Eqs. (2) and (6).

Referring back to FIG. 1, distance or similarity measures are calculated between the query image and database images at step 140. The measures can be calculated using the feature vectors of the query image and database images, or using compact representations of the query image and the database images, for example, using a Mahalanobis metric. Based on the distance or similarity measures, images are ranked at step 150. One or more matching images are then output at step 160.

The aim of Mahalanobis metric learning is to learn a task-specific distance metric function

$$D_{\mathbf{M}}(\mathbf{y}_1, \mathbf{y}_2) = (\mathbf{y}_1 - \mathbf{y}_2)^T \mathbf{M}^T \mathbf{M} (\mathbf{y}_1 - \mathbf{y}_2)$$

$$(7)$$

for comparing two feature vectors $\mathbf{y}_1$ and $\mathbf{y}_2$, where $\mathbf{M}$ (or $\mathbf{M}^T\mathbf{M}$) is the Mahalanobis metric transformation matrix. Such learned distances have been used extensively to adapt feature vectors to various image search related tasks. For example, the Mahalanobis metric can be used in a face verification problem where the feature vectors $\mathbf{y}_1$ and $\mathbf{y}_2$ are extracted from images of faces and the aim is to learn $\mathbf{M}$ so that the test

$$D_{\mathbf{M}}(\mathbf{y}_1, \mathbf{y}_2) > 0$$

$$(8)$$

specifies whether the face images are of the same person.

The Mahalanobis metric can also be used in nearest-neighbor-based classification methods. In this case, a set of labeled image feature vectors $\{\mathbf{y}_i, \gamma_i \in \{1,...,C\}\}_i$ belonging to one of $C$ classes is used as a classifier. Given a new test feature $\mathbf{y}$, the class label $\gamma_i$ assigned to it is that of the nearest $\mathbf{y}_i$ under the Mahalanobis metric,

$$\gamma_i \text{ s.t. } i = \operatorname*{argmin}_{j} D_{\mathbf{M}}(\mathbf{y}, \mathbf{y}_j).$$

$$(9)$$

Extensions of this approach can also use a voting scheme based on the closest n features.

Another task that can be addressed by Mahalanobis metric learning is that of image ranking. In this case, we are given a query feature vector $\mathbf{y}^q$ and we wish to sort a database of features $\{\mathbf{y}_i\}_i$ so that

$$D_{\mathbf{M}}(\mathbf{y}^q, \mathbf{y}_{i_j}) < D_{\mathbf{M}}(\mathbf{y}^q, \mathbf{y}_{i_{j+1}}).$$

$$(10)$$

In this case, matrix $\mathbf{M}$ is learned so that the resulting ranking operation corresponds to human visual perception.

In the present application, we consider the problem of efficiently comparing and ranking items taken from a large set. An example of such a setup can be the comparison of images or a set of image features. In the following, we propose several optimization approaches that make use of both the sparse representations and some given constraints to determine a better estimate for the similarity function that is adapted to the tasks of verification and ranking.

FIG. 2 illustrates an exemplary method 200 for determining the operator for the similarity function. A training set is input at step 210, which may be a database with annotations, for example, indicating whether pictures are similar or dissimilar. The database imposes constraints on the similarity function at step 220, for example, if two pictures are indicated as similar in the training database, the learned similarity function should provide a high similarity score between these two pictures. Given the constraints on similarity between pictures, the operator for the similarity function can be learned at step 230. In the following, the similarity constraints and various learning methods are described in further detail.

**Constraints**

Let $I$ represent one of many items that we would like to compare. Let it also be given that every data item $I$ is associated with a data vector $\mathbf{y} \in \mathbb{R}^N$. For the example of comparing images, the items represent the images to be compared whereas the data vectors are features extracted from each image for easier processing. We denote $S^*(I_1, I_2)$ as the similarity function that tracks the human perception for every item pair $(I_1, I_2)$, and we aim to design a similarity function that is close to $S^*(I_1, I_2)$. From the training images, a set of constraints over $S^*()$ and a training set $I_i, i = 1,...,T$ (with corresponding data vectors $\mathbf{y}_i \in \mathcal{T}$) can be obtained. In one embodiment, we consider two types of constraints each related to a different task of interest.

Pair-wise Constraints and Matching:

In a simpler case, each constraint is defined by a pair of data points and an indicator variable as

$$\{C_{\mathrm{pair},p}\}_{p=1}^{m} = \left\{ i_p, j_p, \gamma_p \,\middle|\, \gamma_p = \left\{ \begin{array}{l} 1 \;\; if \; \mathrm{S}^*(I_{i_p}, I_{j_p}) \geq s_c \\ -1 \;\; if \; \mathrm{S}^*(I_{i_p}, I_{j_p}) < s_c \end{array} \right. \right\} \tag{12}$$

for a constant $s_c$ that tracks human perception so that the variable $\gamma_p$ is 1 if two data points are sufficiently similar (or in the same cluster) and -1 if not. Such pairwise constraints are relevant to a task such as matching. Without loss of generality, we define the task of matching as finding a function, $\mathrm{S}(\mathbf{v}_1, \mathbf{v}_2)$, given the constraints $\{C_{\mathrm{pair},p}\}_{p=1}^{m}$, such that for any given pair of query items and their corresponding data vectors, $(\mathbf{y}_{q1}, \mathbf{y}_{q2})$, the function s() satisfies $\mathrm{S}(\mathbf{y}_{q1}, \mathbf{y}_{q2}) \geq 0$ if $\mathrm{S}^*(I_{q1}, I_{q2}) \geq s_c$ and $\mathrm{S}(\mathbf{y}_{q1}, \mathbf{y}_{q2}) < 0$ otherwise.

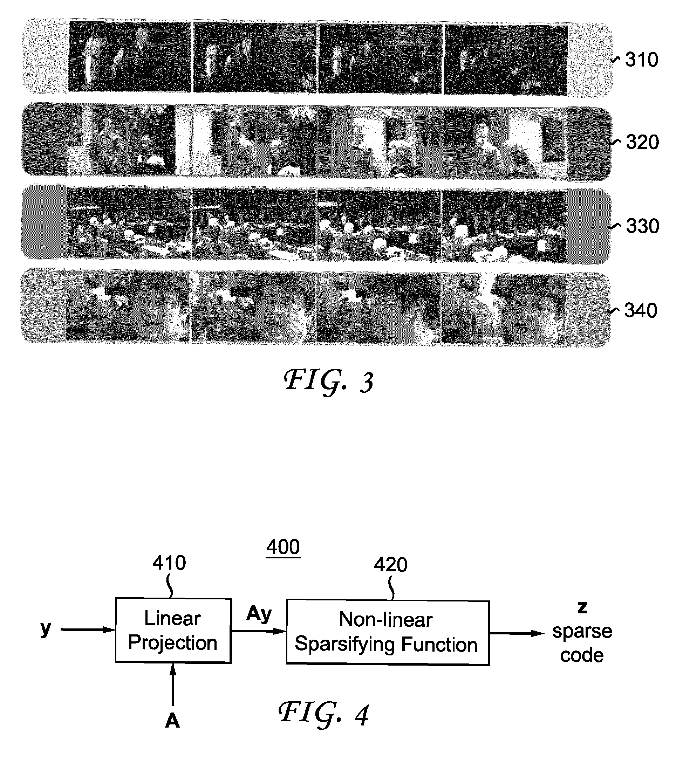

FIG. 3 shows exemplary pictures from an image training database, where similar images are grouped together, and images from different groups are dissimilar. Particularly, pictures in the same row (310, 320, 330, or 340) are grouped together in FIG. 3. The pair-wise constraints between two images within a group are set to 1, and the pair-wise constraints between two images from different groups are set to -1.

The task of matching can be described as determining whether a given query data belongs to a cluster in a dataset. For example, in face recognition systems, the given facial picture of a person is compared to other facial data of the same person within the database to perform verification. It is also possible to perform matching between two given data points even though these points belong to a cluster different from the observed clusters in the database.

Triplet Constraints and Ranking:

A more informative set of constraints are defined by a triplet of data points as

$$\{C_{\mathrm{triplet},p}\}_{p=1}^{m} = \left\{ i_p, j_p, k_p \,\middle|\, \mathrm{S}^*(I_{i_p}, I_{j_p}) > \mathrm{S}^*(I_{i_p}, I_{k_p}) \right\} \tag{13}$$

That is, in one triplet, item $I_{ip}$ is more similar to item $I_{jp}$ than to item $I_{kp}$. The constraints over triplets provide more information on the similarity function and are useful for tasks such as ranking. The task of ranking can be defined as finding a function, $\mathrm{S}(\mathbf{v}_1, \mathbf{v}_2)$ given the constraints $\{C_{\mathrm{triplet},p}\}_{p=1}^{m}$, such that for any given triplet of items $(q_1, q_2, q_3)$ obeying $\mathrm{S}^*(I_{q1}, I_{q2}) > \mathrm{S}^*(I_{q1}, I_{q3})$, the function S() satisfies the condition $\mathrm{S}(\mathbf{y}_{q1}, \mathbf{y}_{q2}) > \mathrm{S}(\mathbf{y}_{q1}, \mathbf{y}_{q3})$. Ranking enables sorting the database items based on the similarity to a query item and it is an essential part of applications such as data search and retrieval. An example for this application can be seen as image based search from a large database of images based on specific similarity criteria.

As discussed above, we can define an analysis operator $\mathbf{A} \in \mathbb{R}^{M \times N}$ such that sparse code $\mathbf{z}$ can be obtained from $\mathbf{Ay}$. FIG. 4 illustrates an exemplary analysis encoding process 400 ($\mathbf{z} = \mathrm{E}(\mathbf{A}, \mathbf{y})$) for generating a sparse code $\mathbf{z}$ for vector $\mathbf{y}$, according to an embodiment of the present principles. At step 410, given vector $\mathbf{y}$ and analysis operator $\mathbf{A}$, the analysis encoder computes $\mathbf{Ay}$, for example, using liner projection. At step 420, the analysis encoder generates sparse code $\mathbf{z}$ using a non-line sparsifying function. The non-linear sparsifying function can be, for example, but not limited to, hard thresholding, soft thresholding, or a function to select some values to zero and modify other values. The non-linear sparsify function can also be a step function or a sigmoid function. The processed vector is then output as sparse code $\mathbf{z}$.

A related application, entitled "Method and Apparatus for Image Search Using Sparsifying Analysis Operators" (Attorney Docket No. PF140323), the teachings of which are specifically incorporated herein by reference, describes different approaches of computing analysis operator $\mathbf{A}$.

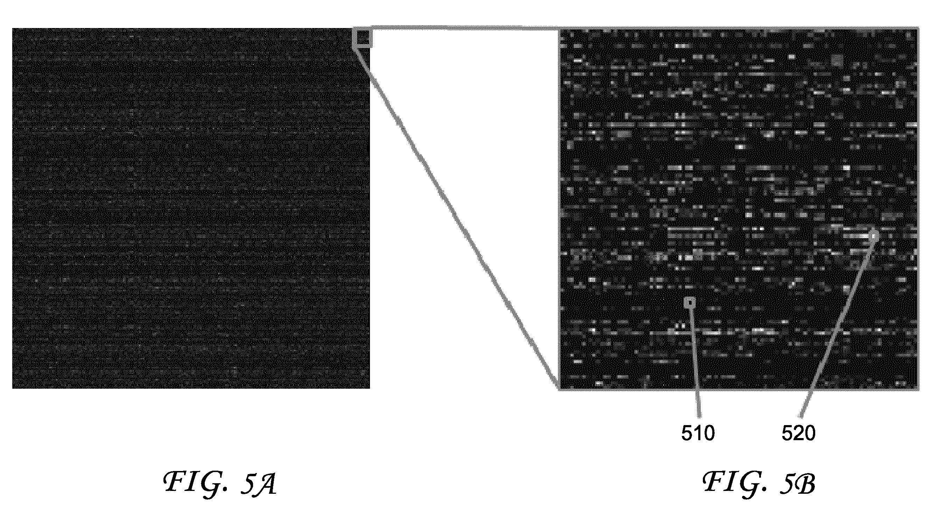

FIG. 5A shows exemplary sparse codes for images in a database, where FIG. 5B is an expanded view of the upper-right portion of FIG. 5A. In the visualization of the sparse coefficients (vertical axis) of the first 2000 images (horizontal axis), a dark pixel (510) indicates "0" in the vector, and a gray pixel (520) indicates the magnitude of the non-zero in the vector. We can see that most pixels in FIG. 5 are dark (i.e., coefficients are sparse), and thus, our methods successfully learned sparse representation. Therefore a similarity function can be computed very fast given the sparse representation.

**Synthesis-Analysis Similarity**

The sparse code $\mathbf{z}$ based on analysis operator $\mathbf{A}$ can be used with a synthesis operator $\mathbf{B}$ to generate a similarity metric. Different from the dictionary $\mathbf{D}$ applied to the original vectors as in Eq. (1), the synthesis operator $\mathbf{B}$ here applies to sparse vectors.

In the cases that the sparse codes $z_j$ are readily available or the encoder function E($\mathbf{A}$, $\mathbf{y}$) is easy to compute, we propose a symmetric similarity function of the form

$$S_{sm}(\mathbf{z}_i, \mathbf{z}_j) = \mathbf{z}_i^T \mathbf{B}^T \mathbf{B} \mathbf{z}_j \qquad (18)$$

where sparse vectors $\mathbf{z}_i, \mathbf{z}_j$ correspond to data vectors $\mathbf{y}_i, \mathbf{y}_j$, respectively, and matrix $\mathbf{B}$ is the synthesis operator to be learned for the given constraints and the task. The similarity function in Eq. (18) can be seen as estimating the similarity between $\mathbf{y}_i$ and $\mathbf{y}_j$ through the associated vectors $\hat{\mathbf{y}}_i = \mathbf{B}\mathbf{z}_i, \hat{\mathbf{y}}_j = \mathbf{B}\mathbf{z}_j$ which are synthesized from the compact representations $\mathbf{z}_i, \mathbf{z}_j$ for the particular task.

However for some of the query items, the corresponding sparse codes may not be available. For such cases, we also propose an asymmetric similarity function of the form

$$S_{asm}(\mathbf{y}_i, \mathbf{z}_j) = \mathbf{y}_i^T \mathbf{B} \mathbf{z}_j \qquad (19)$$

in which data vector $\mathbf{y}_i$ is compared to data vector $\mathbf{y}_j$ for which sparse code $\mathbf{z}_j$ is known. When the sparse code of a query image is needed, it is computed online while sparse codes of the database images can be computed offline beforehand without affecting the speed of the comparison. Thus, an asymmetric similarity function as described in Eq. (19) without requiring the sparse representation of the query image can be very useful since skipping the computation of the sparse code can provide significant speed improvement.

In Eqs. (18) and (19), we use an analysis operator to get sparse representation, and then apply a synthesis operator when calculating the similarity, we call such a similarity metric as a synthesis-analysis similarity.

The similarity functions in Eqs. (18) and (19) are similar to what is proposed in an article by G. Chechik, V. Sharma, U. Shalit, and S. Bengio, entitled "Large scale online learning of image similarity through ranking," Journal of Machine Learning Research, JMLR, pages 1109-1135, 2010 (hereinafter "Chechik"), however, the difference is that the sparse codes, $z_i$, are acquired from the feature vectors by analysis similarity learning. Therefore unlike existing similarity learning methods that compute similarities between feature vectors, using feature vectors or sparse vectors $z_i$ obtained by dictionary learning, the approach we propose in Eqs. (18) and (19) computes similarities between the sparse representations of feature vectors which are computed to enhance the performance for the task. Furthermore the proposed approach does not constrain the sparse codes, for example,

$$\|\mathbf{y} - \mathbf{D}\mathbf{x}\|_2 < \varepsilon \qquad (20)$$

as when dictionary learning is used, which results in more flexibility to improve performance for the task.

Learning Synthesis Operator B

In order to learn $\mathbf{B}$, we can use the pair-wise constraints or triplet constraints as described above. For the pair-wise constraints defined in Eq. (12) given for the verification task, matrix $\mathbf{B}$ can be learned by minimizing the objective function

$$\bar{\mathbf{B}} = \underset{B}{\operatorname{argmin}} \sum_{p=1}^{m} \ell(\gamma_p S_{i_p, j_p}(\mathbf{B})) \qquad (21)$$

in which function $S_{i_p j_p}(\mathbf{B})$ is set as either $S_{sm}(\mathbf{z}_i, \mathbf{z}_j)$ or $S_{asm}(\mathbf{y}_i, \mathbf{z}_j)$ as defined in Eq. (18) or (19) respectively. The function $l()$ in Eq. (21) is a function that penalizes the incorrectly estimated similarities in the training set, i.e., when $\gamma_p S_{i_p j_p}$ is negative.

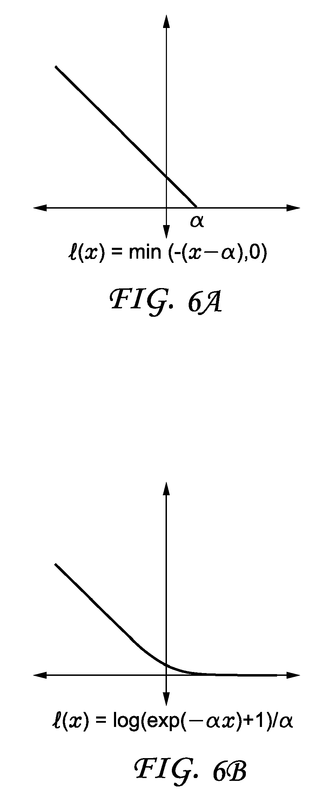

Two possible examples for the penalty function are the hinge loss functions as shown in FIG. 6A and FIG. 6B. In particular, FIG. 6A shows a parametrized hinge loss function $l(x) = \min(-(x - \alpha), 0)$, and FIG. 6B shows a continuous hinge loss function, $l(x) = \log(\exp(-\alpha x) + 1)/\alpha$.

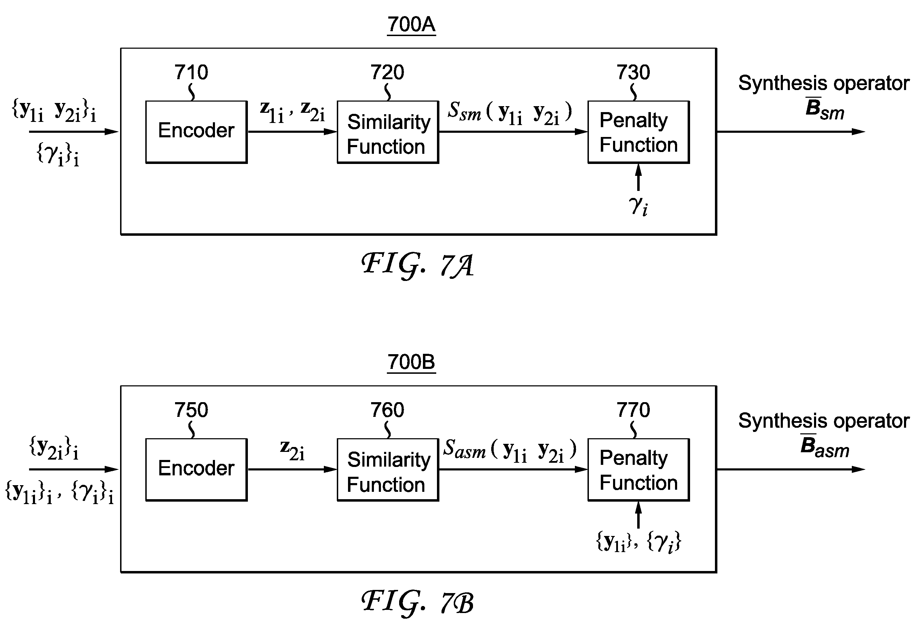

FIG. 7A illustrates an exemplary learning process 700A for learning operator $\mathbf{B}$ using pair-wise constraints for a symmetric similarity metric, according to an embodiment of the present principles. The input of the learning process includes many training vector pairs, $\{\mathbf{y}_{1i}, \mathbf{y}_{2i}\}_i$, which are marked as similar or dissimilar ($\gamma_i = 1$ or -1). The set of annotations, $\{\gamma_i\}_i$, is also input to the learning process. For a pair of vectors, $\mathbf{y}_{1i}$ and $\mathbf{y}_{2i}$, analysis encoder (710) can generate sparse

codes $\mathbf{z}_{1i}$ and $\mathbf{z}_{2i}$, respectively. Subsequently, a similarity function (720) can be used to calculate the similarity between $\mathbf{y}_{1i}$ and $\mathbf{y}_{2i}$, for example, as $S_{sm}(\mathbf{y}_{1i}, \mathbf{y}_{2i}) = \mathbf{z}_{1i}^T \mathbf{B}^T \mathbf{B} \mathbf{z}_{2i}$. Using the estimated similarity metric $S_{sm}(\mathbf{y}_{1i}, \mathbf{y}_{2i})$ and annotated similarity result $\gamma_i$, a penalty function (730), for example, as described in Eq. (21), can be applied. Generally the penalty function sets a large value when the estimated similarity metric does not match the annotated result. The penalty function is accumulated over the training vector pairs, and the synthesis operator that minimizes the penalty function, i.e., the synthesis operator that provides the closest similarity metric to the annotation results is chosen as the solution $\overline{\mathbf{B}}_{sm}$.

For the ranking task and the triplet constraints as defined in Eq. (13), an optimum synthesis operator $\mathbf{B}$ that best fits these sets of constraints can be learned with an objective function of the form

$$\overline{\mathbf{B}} = \underset{\mathbf{B}}{\mathrm{argmin}} \sum_{p=1}^{m} \ell(S_{i_p, j_p}(\mathbf{B}) - S_{i_p, k_p}(\mathbf{B})) \qquad (22)$$

in which the functions $S_{i_p, j_p}(\mathbf{B})$ and $\ell()$ are defined the same as in Eq. (21).

FIG. 7B illustrates an exemplary asymmetric learning process 700B for learning operator $\mathbf{B}$ using pair-wise constraints for an asymmetric similarity metric, according to an embodiment of the present principles. Similar to method 700A, the input of the learning process includes many training vector pairs, $\{\mathbf{y}_{1i}, \mathbf{y}_{2i}\}_i$, and the annotation set $\{\gamma_i\}_i$. For a vector $\mathbf{y}_{2i}$, analysis encoder (750) can generate sparse code $\mathbf{z}_{2i}$. Subsequently, a similarity function (760) can be used to calculate the similarity between $\mathbf{y}_{1i}$ and $\mathbf{y}_{2i}$, for example, as $S_{asm}(\mathbf{y}_{1i}, \mathbf{y}_{2i}) = \mathbf{y}_{1i}^T \mathbf{B} \mathbf{z}_{2i}$. Using the estimated similarity metric $S_{asm}(\mathbf{y}_{1i}, \mathbf{y}_{2i})$ and annotated similarity result $\gamma_i$, a penalty function (770), for example, as described in Eq. (21), can be applied. The solution $\overline{\mathbf{B}}_{asm}$ to the penalty function is output as the synthesis operator.

The learning process when triplet constraints are used for training is similar to process 700A or 700B. However, the input now includes training vector triplets $\{\mathbf{y}_{1i}, \mathbf{y}_{2i}, \mathbf{y}_{3i}\}_i$, where $\mathbf{y}_{1i}$ and $\mathbf{y}_{2i}$ are more similar than $\mathbf{y}_{1i}$ and $\mathbf{y}_{3i}$ are. For the symmetric learning process, the analysis encoder generates sparse codes $\mathbf{z}_{1i}, \mathbf{z}_{2i}, \mathbf{z}_{3i}$ for each training vector triplet $\mathbf{y}_{1i}, \mathbf{y}_{2i}, \mathbf{y}_{3i}$, respectively. The similarity function is applied to $\mathbf{z}_{1i}, \mathbf{z}_{zi}$, and to $\mathbf{z}_{1i}, \mathbf{z}_{3i}$ to get $S_{sm}(\mathbf{y}_{1i}, \mathbf{y}_{2i})$ and $S_{sm}(\mathbf{y}_{1i}, \mathbf{y}_{3i})$, respectively. The penalty function takes $S_{sm}(\mathbf{y}_{1i}, \mathbf{y}_{2i})$ and $S_{sm}(\mathbf{y}_{1i}, \mathbf{y}_{3i})$ as input, and penalizes when $S_{sm}(\mathbf{y}_{1i}, \mathbf{y}_{2i})$ indicates less similarity than $S_{sm}(\mathbf{y}_{1i}, \mathbf{y}_{3i})$.

For the asymmetric learning process, the analysis encoder generates sparse codes $\mathbf{z}_{2i}$ and $\mathbf{z}_{3i}$ for training vectors $\mathbf{y}_{2i}$ and $\mathbf{y}_{3i}$, respectively. The similarity function is applied to $\mathbf{y}_{1i}, \mathbf{z}_{2i}$, and to $\mathbf{y}_{1i}, \mathbf{z}_{3i}$ to get $S_{asm}(\mathbf{y}_{1i}, \mathbf{y}_{2i})$ and $S_{asm}(\mathbf{y}_{1i}, \mathbf{y}_{3i})$, respectively. The penalty function takes $S_{asm}(\mathbf{y}_{1i}, \mathbf{y}_{2i})$ and $S_{asm}(\mathbf{y}_{1i}, \mathbf{y}_{2i})$ as input, and penalizes when $S_{asm}(\mathbf{y}_{1i}, \mathbf{y}_{2i})$ indicates less similarity than $S_{asm}(\mathbf{y}_{1i}, \mathbf{y}_{3i})$.

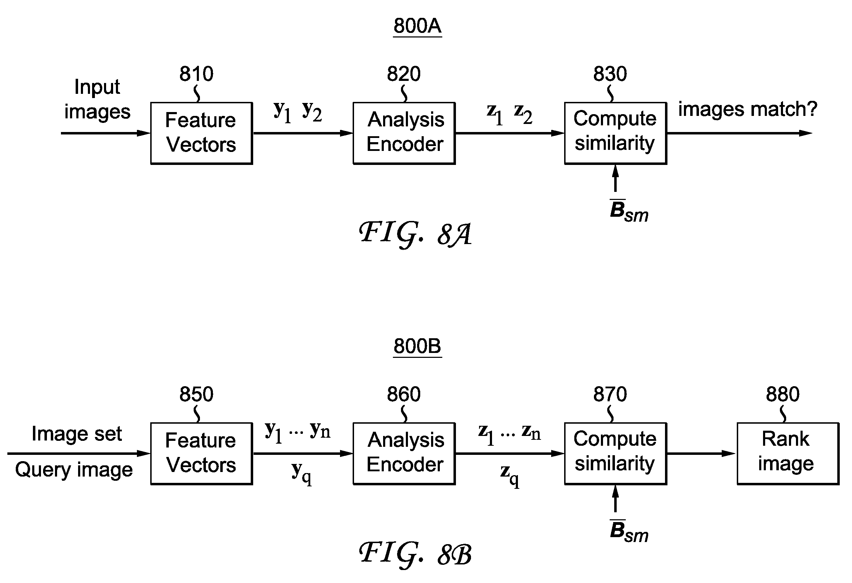

FIG. 8A illustrates an exemplary process 800A for performing image matching, according to an embodiment of the present principles. Two input images are represented by feature vectors $\mathbf{y}_1$ and $\mathbf{y}_2$, respectively (810). Analysis encoder (820) is used to sparsify vectors $\mathbf{y}_1$ and $\mathbf{y}_2$ to generate sparse codes $\mathbf{z}_1$ and $\mathbf{z}_z$, respectively. Then a similarity metric (830) can be calculated based on the sparse codes, for example, using the similarity function as in Eq. (18) using the symmetric operator $\overline{\mathbf{B}}_{sm}$. Based on whether the similarity metric exceeds a threshold or not, i.e., indicates a high similarity or not, the image matching process decides whether the two input images are matching or not. In another embodiment, when an asymmetric operator $\overline{\mathbf{B}}_{asm}$ is used to computer similarity (830), sparse code $\mathbf{z}_2$ is generated (820) for feature vector $\mathbf{y}_2$, then the similarity metric is calculated (830) using $\mathbf{y}_1$ and $\mathbf{z}_2$ based on the asymmetric operator $\overline{\mathbf{B}}_{asm}$, for example, as described in Eq. (19).

FIG. 8B illustrates an exemplary process 800B for performing image ranking for a query image, according to an embodiment of the present principles. For the query image and the database images, feature vectors $\mathbf{y}_q$ and $\mathbf{y}_1,..., \mathbf{y}_n$ are generated (850), respectively. Analysis encoder (860) is used to sparsify vectors $\mathbf{y}_q$ and $\mathbf{y}_1,..., \mathbf{y}_n$ to generate sparse codes $\mathbf{z}_q$ and $\mathbf{z}_1,..., \mathbf{z}_n$, respectively. Then a similarity metric (870) can be calculated based on the sparse codes for the pair of $\{\mathbf{z}_q, \mathbf{z}_i\}$, $i = 1,..., n$, for example, using the symmetric similarity function as in Eq. (18). Based on the values of the similarity metrics, we can decide the order of similarity to the query image among the database images and images are ranked (880). In another embodiment, when an asymmetric operator $\overline{\mathbf{B}}_{asm}$ is used to computer similarity (870), sparse codes $\mathbf{z}_1,..., \mathbf{z}_n$ are generated (860) for feature vectors $\mathbf{y}_1,..., \mathbf{y}_n$, respectively, then the similarity metric (870) is calculated for the pair of $\{\mathbf{y}_q, \mathbf{z}_i\}$, $i = 1, ..., n$, for example, using the asymmetric operator $\overline{\mathbf{B}}_{asm}$, for example, as described in Eq. (19).

A post processing step to the encoder function can be added that adds an extra entry to vector $\mathbf{z}$ that is equal to 1, which would further improve the flexibility of the proposed encoding algorithms. A pre-processing step to the encoder function can be added that adds an extra entry to the vector **y** that is equal to 1, which would further improve the flexibility of the proposed matching and ranking algorithms.

It should be noted that for image databases, the process of computing the sparse codes $\mathbf{z}_1,...,\mathbf{z}_n$ can be performed offline. Thus, for feature vectors $\mathbf{y}_1,...,\mathbf{y}_n$ representing images from the databases, the corresponding encoding functions can be pre-computed offline and the sparse codes can be stored.

Joint Learning of Analysis and Synthesis Operators

Instead of learning analysis operator **A** and synthesis operator **B** sequentially as described above, it is also possible to learn these operators jointly on the training set. Furthermore it is also possible to learn other parameters jointly.

In one embodiment of such a system, given two feature vectors $\mathbf{y}_i, \mathbf{y}_j \in \mathbb{R}^N$ representing two images $i,j$, respectively, we present a similarity metric of the form

$$S(\mathbf{y}_i, \mathbf{y}_j) = \mathbf{z}_i^\top \mathbf{B} \mathbf{z}_j \qquad (23)$$

in which the sparse code $\mathbf{z}_i, \mathbf{z}_j$ are obtained using the soft thresholding function acting on each entry of a vector with the set of thresholds $\lambda$ as

$$\mathbf{z}_i = \mathrm{soft}_\lambda(\mathbf{A}\mathbf{y}_i), \qquad \mathbf{z}_j = \mathrm{soft}_\lambda(\mathbf{A}\mathbf{y}_j). \qquad (24)$$

The matrices **A**, **B** and the parameter vector $\lambda$ are all learned from a training dataset of pairs $(\mathbf{z}_{i_p}, \mathbf{z}_{j_p})$, $p = 1,...,$ $m$ selected from a training set of size $T$ with each pair labeled as similar or dissimilar ($\gamma_p = 1$ or - 1) by minimizing an objective function of the form

$$\bar{\mathbf{A}}, \bar{\mathbf{B}}, \bar{\lambda} = \underset{\mathbf{A},\mathbf{B},\lambda}{\mathrm{argmin}} \sum_{p=1}^{m} \ell\left(\gamma_p \mathbf{z}_{i_p}^\top \mathbf{B} \mathbf{z}_{j_p}\right) + \psi(\mathbf{A}) + \phi(\mathbf{B})$$

$$\mathrm{s.\,t.} \quad \mathbf{z}_t = \mathrm{soft}_\lambda(\mathbf{A}\mathbf{y}_t), \ t = 1,...,T \qquad (25)$$

where the penalty function $\ell(.)$ can be selected as the continuous hinge function as shown in FIG. 5B. The functions $\psi(.)$ and $\phi(.)$ are regularization functions for the matrices **A** and **B**. Some examples to the regularization functions for the operators are functions enforcing normalized rows, a sparse structure or a diagonal structure on the operators. Even though the objective function in Eq. (25) is non-linear and non-convex, it can still be minimized using off-the-shelf optimization methods such as stochastic gradient descent.

Even though the use of correlation based similarity function with sparse vectors as in Eq. (23) is proposed in earlier works by Chechik, making use of analysis operators to obtain the sparse codes as in Eq. (24) to be used in this similarity function is new with multiple advantages. Firstly, as compared to computing a sparse representation in a dictionary, the operation as described in Eq. (24) is computationally much simpler and faster. Secondly, the use of an analysis operator also enables an asymmetric system with a similarity function in the form of

$$S(\mathbf{y}_i, \mathbf{y}_j) = \mathbf{y}_i^\top (\mathbf{A}^\top \mathbf{B} \mathbf{z}_j) \qquad (26)$$

such that the comparison is even faster for a new item.

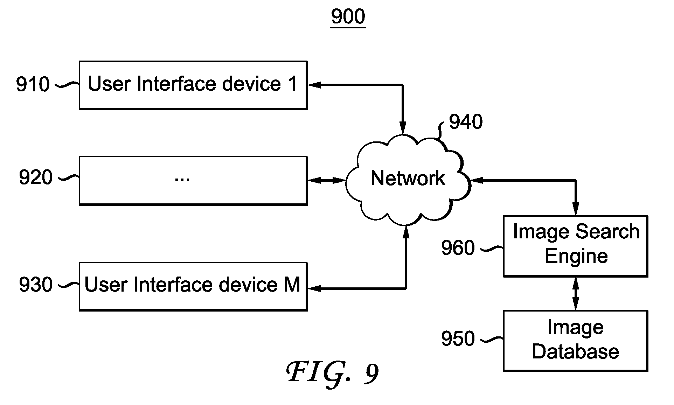

FIG. 9 illustrates an exemplary system 900 that has multiple user devices connected to an image search engine according to the present principles. In FIG. 9, one or more user devices (910, 920, and 930) can communicate with image search engine 960 through network 940. The image search engine is connected to multiple users, and each user may communicate with the image search engine through multiple user devices. The user interface devices may be remote controls, smart phones, personal digital assistants, display devices, computers, tablets, computer terminals, digital video recorders, or any other wired or wireless devices that can provide a user interface.

The image search engine 960 may implement various methods as discussed above. Image database 950 contains one or more databases that can be used as a data source for searching images that match a query image or for training the parameters.

In one embodiment, a user device may request, through network 940, a search to be performed by image search engine 960 based on a query image. Upon receiving the request, the image search engine 960 returns one or more matching images and/or their rankings. After the search result is generated, the image database 950 provides the matched image(s) to the requesting user device or another user device (for example, a display device).

When a user device sends a search request to the image search engine, the user device may send the query image directly to the image search engine. Alternatively, the user device may process the query image and send a signal representative of the query image. For example, the user device may perform feature extraction on the query image and send the feature vector to the search engine. Or the user device may further perform sparsifying function and send the sparse representation of the query image to the image search engine. These various embodiments distribute the computations needed for image search between the user device and image search engine in different manners. The embodiment to use may be decided by the user device's computational resources, network capacity, and image search engine computational resources.

The image search may also be implemented in a user device itself. For example, a user may decide to use a family photo as a query image, and to search other photos in his smartphone with the same family members.

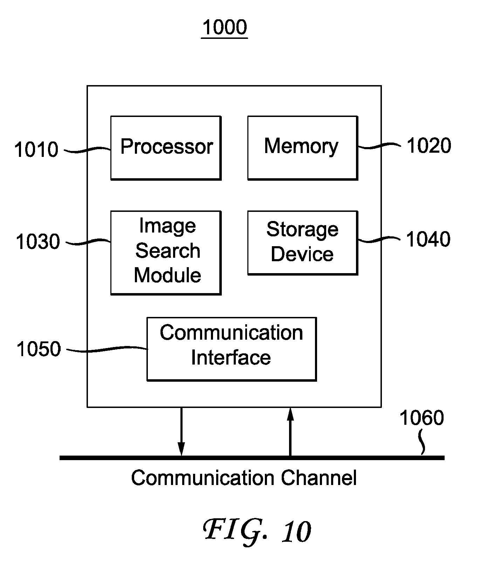

FIG. 10 illustrates a block diagram of an exemplary system 1000 in which various aspects of the exemplary embodiments of the present principles may be implemented. System 1000 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 1000 may be communicatively coupled to other similar systems, and to a display via a communication channel as shown in FIG. 10 and as known by those skilled in the art to implement the exemplary video system described above.

The system 1000 may include at least one processor 1010 configured to execute instructions loaded therein for implementing the various processes as discussed above. Processor 1010 may include embedded memory, input output interface and various other circuitries as known in the art. The system 1000 may also include at least one memory 1020 (e.g., a volatile memory device, a non-volatile memory device). System 1000 may additionally include a storage device 1040, which may include non-volatile memory, including, but not limited to, EEPROM, ROM, PROM, RAM, DRAM, SRAM, flash, magnetic disk drive, and/or optical disk drive. The storage device 1040 may comprise an internal storage device, an attached storage device and/or a network accessible storage device, as non-limiting examples. System 1000 may also include an image search engine 1030 configured to process data to provide image matching and ranking results.

Image search engine 1030 represents the module(s) that may be included in a device to perform the image search functions. Image search engine 1030 may be implemented as a separate element of system 1000 or may be incorporated within processors 1010 as a combination of hardware and software as known to those skilled in the art.

Program code to be loaded onto processors 1010 to perform the various processes described hereinabove may be stored in storage device 1040 and subsequently loaded onto memory 1020 for execution by processors 1010. In accordance with the exemplary embodiments of the present principles, one or more of the processor(s) 1010, memory 1020, storage device 1040 and image search engine 1030 may store one or more of the various items during the performance of the processes discussed herein above, including, but not limited to a query image, the analysis operator, synthesis operator, sparse codes, equations, formula, matrices, variables, operations, and operational logic.

The system 1000 may also include communication interface 1050 that enables communication with other devices via communication channel 1060. The communication interface 1050 may include, but is not limited to a transceiver configured to transmit and receive data from communication channel 1060. The communication interface may include, but is not limited to, a modem or network card and the communication channel may be implemented within a wired and/or wireless medium. The various components of system 1000 may be connected or communicatively coupled together using various suitable connections, including, but not limited to internal buses, wires, and printed circuit boards.

The exemplary embodiments according to the present principles may be carried out by computer software implemented by the processor 1010 or by hardware, or by a combination of hardware and software. As a non-limiting example, the exemplary embodiments according to the present principles may be implemented by one or more integrated circuits. The memory 1020 may be of any type appropriate to the technical environment and may be implemented using any appropriate data storage technology, such as optical memory devices, magnetic memory devices, semiconductor-based memory devices, fixed memory and removable memory, as non-limiting examples. The processor 1010 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles. Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method for performing image search, comprising:

   accessing (120, 130) at least one of a first feature vector corresponding to a query image and a first sparse representation of the query image, the first sparse representation being based on an analysis operator and the first feature vector;
   determining (140) a similarity metric between the query image and a second image of an image database using a synthesis operator, responsive to a second sparse representation and one of the first feature vector and the first sparse representation, the second sparse representation being based on the second feature vector corresponding to the second image and the analysis operator; and
   generating (160) an image search output based on the similarity metric between the query image and the second image.

2. The method according to claim 1, wherein at least one of the first feature vector and the first sparse representation is received from a user device via a communication network, further comprising transmitting the image search output to the user device via the communication network.

3. The method according to any of claims 1-2, wherein the synthesis operator is determined based on a set of pairwise constraints, wherein each pair-wise constraint indicates whether a corresponding pair of training images are similar or dissimilar.

4. The method according to any of claims 1-3, wherein the synthesis operator is determined based on a set of triplet constraints, wherein each triplet constraint indicates that a first training image of the triplet is more similar to a second training image of the triplet than to a third training image of the triplet.

5. The method according to claim 3 or 4, wherein the synthesis operator is trained such that a similarity metric determined for training images corresponding to a pair-wise constraint or a triplet constraint is consistent with what the pair-wise constraint or the triplet constraint indicates.

6. The method according to any of claims 1-5, wherein the similarity metric is determined as $S_{sm}(\mathbf{z}_q,\mathbf{z}_2) = \mathbf{z}_b^T\mathbf{B}^T\mathbf{B}\mathbf{z}_2$, wherein $S_{sm}()$ is the similarity metric, $\mathbf{z}_q$ is the first sparse representation of the query image, $\mathbf{z}_2$ is the second sparse representation of the second image in the image database, and $\mathbf{B}$ is the synthesis operator.

7. The method according to any of claims 1-6, wherein the similarity metric is determined as $S_{asm}(\mathbf{y}_q,\mathbf{z}_2) = \mathbf{y}_q^T\mathbf{B}\mathbf{z}_2$, wherein $S_{asm}()$ is the similarity metric, $\mathbf{y}_q$ is the first feature vector of the query image, $\mathbf{z}_2$ is the second sparse representation of the second image in the image database, and $\mathbf{B}$ is the synthesis operator.

8. An apparatus for performing image search, comprising:

an input configured to access at least one of a first feature vector corresponding to a query image and a first sparse representation of the query image, the first sparse representation being based on an analysis operator and the first feature vector; and
one or more processors (1130) configured to:

determine a similarity metric between the query image and a second image of an image database using a synthesis operator, responsive to a second sparse representation and one of the first feature vector and the first sparse representation, the second sparse representation being based on the second feature vector corresponding to the second image and the analysis operator, and
generate an image search output based on the similarity metric between the query image and the second image.

9. The apparatus according to claim 8, further comprising:

a communication interface configured to receive the at least one of the first feature vector and the first sparse representation from a user device via a communication network, and to transmit the image search output to the user device via the communication network.

10. The apparatus according to any of claims 8-9, wherein the synthesis operator is determined based on a set of pair-wise constraints, wherein each pair-wise constraint indicates whether a corresponding pair of training images are similar or dissimilar.

11. The apparatus according to any of claims 8-10, wherein the synthesis operator is determined based on a set of triplet constraints, wherein each triplet constraint indicates that a first training image of the triplet is more similar to a second training image of the triplet than to a third training image of the triplet.

12. The apparatus according to claim 10 or 11, wherein the synthesis operator is trained such that a similarity metric determined for training images corresponding to a pair-wise constraint or a triplet constraint is consistent with what the pair-wise constraint or the triplet constraint indicates.

13. The apparatus according to any of claims 8-11, wherein the similarity metric is determined as $S_{sm}(\mathbf{z}_q,\mathbf{z}_2) = \mathbf{z}_q^T\mathbf{B}^T\mathbf{B}\mathbf{z}_2$, wherein $S_{sm}()$ is the similarity metric, $\mathbf{z}_q$ is the first sparse representation of the query image, $\mathbf{z}_2$ is the second sparse representation of the second image in the image database, and $\mathbf{B}$ is the synthesis operator.

14. The apparatus according to any of claims 8-13, wherein the similarity metric is determined as $S_{asm}(\mathbf{y}_q,\mathbf{z}_2) = \mathbf{y}_q^T\mathbf{B}\mathbf{z}_2$, wherein $S_{asm}()$ is the similarity metric, $\mathbf{y}_q$ is the first feature vector of the query image, $\mathbf{z}_2$ is the second sparse representation of the second image in the image database, and $\mathbf{B}$ is the synthesis operator.

15. A non-transitory computer readable storage medium having stored thereon instructions for implementing a method according to any of claims 1-7.

<u>100</u>

| Input query image | ⟋ 110 |

↓

| Image feature vector calculation | ⟋ 120 |

↓

| Compact representation | ⟋ 130 |

↓

| Distance/similarity calculation | ⟋ 140 |

↓

| Image ranking | ⟋ 150 |

↓

| Output matching image(s) | ⟋ 160 |

*FIG. 1*

<u>200</u>

| Input training set | ⟋ 210 |

↓

| Similarity constraints | ⟋ 220 |

↓

| Learn operator for the similarity function | ⟋ 230 |

*FIG. 2*

*FIG. 3*

*FIG. 4*

*FIG. 5A*

510    520

*FIG. 5B*

EP 3 166 021 A1

$$\ell(x) = \min\left(-(x-\alpha), 0\right)$$

*FIG. 6A*

$$\ell(x) = \log(\exp(-\alpha x)+1)/\alpha$$

*FIG. 6B*

$\{\mathbf{y}_{1i} \ \mathbf{y}_{2i}\}_i$

$\{\gamma_i\}_i$

710

Encoder

$\mathbf{z}_{1i}, \ \mathbf{z}_{2i}$

720

Similarity Function

$S_{sm}(\mathbf{y}_{1i} \ \mathbf{y}_{2i})$

730

Penalty Function

$\gamma_i$

Synthesis operator $\overline{\boldsymbol{B}}_{sm}$

*FIG. 7A*

$\{\mathbf{y}_{2i}\}_i$

$\{\mathbf{y}_{1i}\}_i, \ \{\gamma_i\}_i$

750

Encoder

$\mathbf{z}_{2i}$

760

Similarity Function

$S_{asm}(\mathbf{y}_{1i} \ \mathbf{y}_{2i})$

770

Penalty Function

$\{\mathbf{y}_{1i}\}, \ \{\gamma_i\}$

Synthesis operator $\overline{\boldsymbol{B}}_{asm}$

700B

*FIG. 7B*

EP 3 166 021 A1

800A

| 810 | | 820 | | 830 | |
|---|---|---|---|---|---|

Input images → [Feature Vectors] $\mathbf{y}_1$ $\mathbf{y}_2$ → [Analysis Encoder] $\mathbf{z}_1$ $\mathbf{z}_2$ → [Compute similarity] → images match?

$\overline{\boldsymbol{B}}_{sm}$

*FIG. 8A*

800B

| 850 | | 860 | | 870 | | 880 |
|---|---|---|---|---|---|---|

Image set
Query image → [Feature Vectors] $\mathbf{y}_1 \dots \mathbf{y}_n$ / $\mathbf{y}_q$ → [Analysis Encoder] $\mathbf{z}_1 \dots \mathbf{z}_n$ / $\mathbf{z}_q$ → [Compute similarity] → [Rank image]

$\overline{\boldsymbol{B}}_{sm}$

*FIG. 8B*

900

910 — User Interface device 1

920 — ...

930 — User Interface device M

Network

940

Image Search Engine

960

Image Database

950

*FIG. 9*

<u>1000</u>

| | |
|---|---|
| 1010 — Processor | Memory — 1020 |
| 1030 — Image Search Module | Storage Device — 1040 |
| 1050 — Communication Interface | |

1060

Communication Channel

*FIG. 10*

Europäisches
Patentamt

European
Patent Office

Office européen
des brevets

# EUROPEAN SEARCH REPORT

Application Number

EP 15 30 6770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Dr Meenakshi ET AL: "Analysis of Distance Measures in Content Based Image Retrieval Analysis of Distance Measures in Content based Image Retrieval", Global Journal of Computer Science and Technology, 1 January 2014 (2014-01-01), XP055270399, Retrieved from the Internet: URL:https://globaljournals.org/GJCST_Volume14/2-Analysis-of-Distance-Measures.pdf [retrieved on 2016-05-03] * sections IV.b) and V * | 1-15 | INV. G06F17/30 |
| X | LI-WEI KANG ET AL: "Feature-Based Sparse Representation for Image Similarity Assessment", IEEE TRANSACTIONS ON MULTIMEDIA, IEEE SERVICE CENTER, PISCATAWAY, NJ, US, vol. 13, no. 5, 1 October 2011 (2011-10-01), pages 1019-1030, XP011386926, ISSN: 1520-9210, DOI: 10.1109/TMM.2011.2159197 * the whole document * | 1-15 | |
| X | Pablo Sprechmann ET AL: "Efficient Supervised Sparse Analysis and Synthesis Operators", , 1 January 2013 (2013-01-01), XP055270405, Retrieved from the Internet: URL:http://papers.nips.cc/paper/5002-supervised-sparse-analysis-and-synthesis-operators.pdf [retrieved on 2016-05-03] * section 1 * | 1-15 | |

TECHNICAL FIELDS SEARCHED (IPC)

G06F

-/--

The present search report has been drawn up for all claims

| Place of search | Date of completion of the search | Examiner |
|---|---|---|
| The Hague | 3 June 2016 | Correia Martins, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

| | Europäisches Patentamt<br>European Patent Office<br>Office européen des brevets | **EUROPEAN SEARCH REPORT** | Application Number<br>EP 15 30 6770 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SANGNAM NAM ET AL: "The Cosparse Analysis Model and Algorithms",<br>ARXIV.ORG, CORNELL UNIVERSITY LIBRARY, 201 OLIN LIBRARY CORNELL UNIVERSITY ITHACA, NY 14853,<br>24 June 2011 (2011-06-24), XP080511277,<br>DOI: 10.1016/J.ACHA.2012.03.006<br>* abstract * | 1-15 | |
| X | RON RUBINSTEIN ET AL: "Analysis K-SVD: A Dictionary-Learning Algorithm for the Analysis Sparse Model",<br>IEEE TRANSACTIONS ON SIGNAL PROCESSING, IEEE SERVICE CENTER, NEW YORK, NY, US,<br>vol. 61, no. 3,<br>1 February 2013 (2013-02-01), pages 661-677, XP011487879,<br>ISSN: 1053-587X, DOI: 10.1109/TSP.2012.2226445<br>* section I-A * | 1-15 | |
| X | US 2012/114248 A1 (YANG LINJUN [CN] ET AL) 10 May 2012 (2012-05-10)<br>* paragraphs [0003], [0004], [0013] * | 1-15 | **TECHNICAL FIELDS SEARCHED (IPC)** |

The present search report has been drawn up for all claims

| Place of search | Date of completion of the search | Examiner |
|---|---|---|
| The Hague | 3 June 2016 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 166 021 A1**

## ANNEX TO THE EUROPEAN SEARCH REPORT
## ON EUROPEAN PATENT APPLICATION NO.

EP 15 30 6770

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2016

| Patent document cited in search report | Publication date | Patent family member(s) | Publication date |
|---|---|---|---|
| US 2012114248 A1 | 10-05-2012 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **G. CHECHIK ; V. SHARMA ; U. SHALIT ; S. BEN-GIO.** Large scale online learning of image similarity through ranking. *Journal of Machine Learning Research,* 2010, 1109-1135